# EUROPÄISCHE PATENTANMELDUNG

(11) **EP 0 957 318 A2**
(43) Veröffentlichungstag der Anmeldung: **17.11.1999**
(21) Anmeldenummer: 99106753.9
(22) Anmeldetag: 03.04.1999
(51) Int. Cl.: F24D 3/14

(54) **Aufzugshalter zum Aufhängen von Heizungsrohren in Betondecken und Betonfussböden**

(30) Priorität: 15.05.1998 DE 29808790 U
(71) Anmelder: D.F. LIEDELT " VELTA" PRODUKTIONS- UND VERTRIEBS-GMBH, 22851 Norderstedt (DE)
(72) Erfinder: Lipinski, Johann, 20257 Hamburg (DE)
(74) Vertreter: von Raffay, Vincenz, Dipl.-Ing.

(57) **Zusammenfassung**

Der Aufzugshalter dient dem Aufhängen von Heizungsrohre (3) tragenden, gitterförmigen Aufzugsträgerelementen (4) in Betondecken und Betonfußböden (1) mit Bewehrungsgitter (2). Zur einfachen Sicherung der Aufzugsträgerelemente gegen Aufschwimmen sind die Aufzugshalter L-förmig ausgebildet, wobei der in Gebrauchslage senkrechte Steg (6a) an dem Bewehrungsgitter (4) befestigbar und der waagerechte Steg (6b) formschlüssig mit dem Gitterdraht (4a oder 4b) des Aufzugsträgerelementes (4) verbindbar ist. Die Aufzugshalter dienen nicht nur dem Anheben und Einhängen der Aufzugsträgerelemente mit den Heizungsrohren in dem darüber liegenden Bewehrungsgitter, sondern sie verhindern auch gleichzeitig ein Aufschwimmen des Aufzugsträgerelementes mit den Heizungsrohren beim Schütten des Betons. Durch die besondere Gestaltung wird in einfacher Weise erreicht, daß diese technischen Anforderungen erfüllt werden, und daß eine preiswerte Konstruktion vorliegt.

## Beschreibung

Die Erfindung betrifft einen Aufzugshalter nach dem Oberbegriff des Anspruches 1.

Ein derartiger Aufzugshalter ist aus der EP 385 148 A1 bekannt. Bei Herstellung dieses bekannten Betonfußbodens wird eine Maßnahme vorgeschlagen, um ein Aufschwimmen der Aufzugsträgerelemente mit den Heizungsrohren zu verhindern. Dieses geschieht nach einer Ausführungsform durch besondere Sicherungsklammern.

Der Erfindung liegt nun die Aufgabe zugrunde, die Herstellung eines Betonfußbodens, insbesondere die Sicherung der Aufzugsträgerelemente gegen Aufschwimmen, zu vereinfachen.

Diese Aufgabe wird durch das Kennzeichen des Anspruches 1 gelöst. Die Aufzugshalter nach der Erfindung dienen nicht nur dem Anheben und Einhängen der Aufzugsträgerelemente mit den Heizungsrohren in dem darüberliegenden Bewehrungsgitter, sondern sie verhindern auch gleichzeitig ein Aufschwimmen des Aufzugsträgerelementes mit den Heizungsrohren beim Schütten des Betons. Dadurch daß die Aufzugshalter L-förmig ausgebildet sind, können die in Gebrauchslage waagerecht verlaufende Stege mit den Gitterdrähten des Aufzugsträgerelementes formschlüssig verbunden werden. Hierdurch wird eine entsprechend drehmomentensteife Verbindung in einer Richtung geschaffen. In der Ebene, in der das L liegt, kann ein Verdrehen des Aufzugsträgerelementes nicht erfolgen. Wenn die Aufzugshalter nun abwechselnd in senkrecht zu einander verlaufende Gitterdrähte des Aufzugaträgerelementes eingehängt werden, ist eine Sicherung in beiden Richtungen gewährleistet. Die Aufzugsträgerelemente, die vorzugsweise einen schraubenförmigen waagerechten Steg aufweisen, können einfach und dauerhaft mit den gewünschten Gitterstäben verbunden werden. Sie dienen dann dem Anheben des Aufzugsträgerelementes und dem Einhängen in das dartiberliegende Bewehrungsgitter. Immer in die Richtung, in die der waagerechte Steg des L in Gebrauchslage verläuft, ist ein Aufschwimmen nicht möglich. Wenn die waagerechten Stege abwechselnd in die beiden Richtungen der senkrecht zueinander verlaufenden Gitterdrähte angeordnet sind, ist eine Sicherung, d.h. eine Bewegung senkrecht zu der Ebene des Aufzugsträgerelementes nicht möglich. Besondere Teile, um das Aufschwimmen zu verhindern, sind nicht mehr erforderlich. Diese Aufgabe wird durch die Aufzugshalter mit übernommen.

Im folgenden wird die Erfindung unter Hinweis auf die Zeichnung anhand eines Ausführungsbeispiels näher erläutert.

Es zeigt:
- Fig. 1:: einen Querschnitt durch eine Betondecke mit zwei Bewehrungsgittern;
- Fig. 2:: eine perspektivische Ansicht eines Aufzugsträgerelementes mit Aufzugshaltern nach einer Ausführungsform nach der Erfindung; und
- Fig. 3: drei Ansichten der Ausführungsform des Aufzugshalters nach Fig. 2.

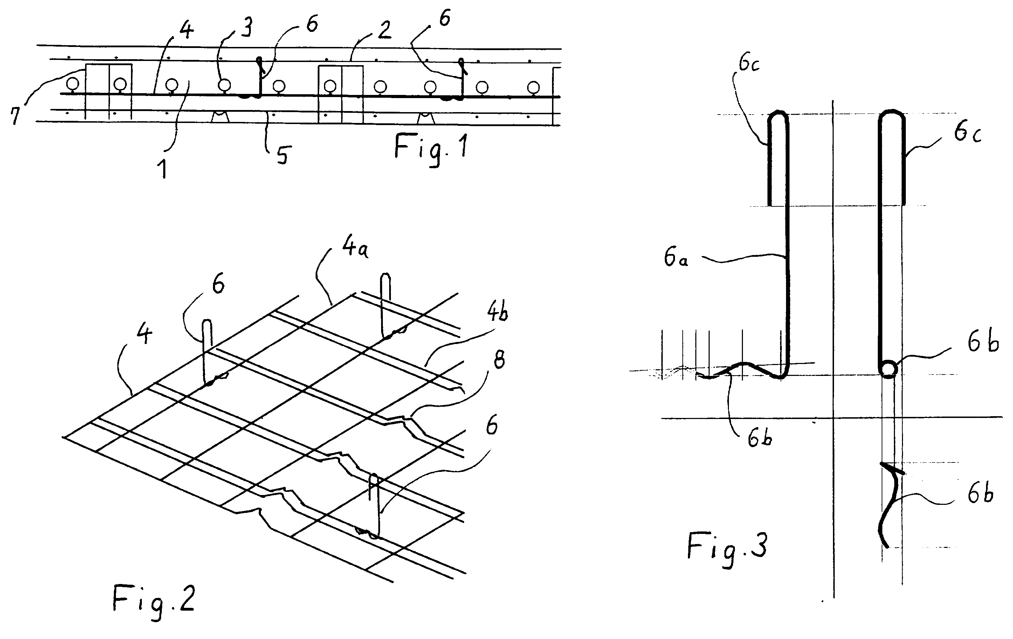

In der Fig. 1 ist eine Betondecke dargestellt, so wie sie grundsätzlich bekannt ist. In dem Beton 1 befinden sich zwei Bewehrungsgitter, ein oberes 2 und ein unteres 5. Abstandskörbe sind mit 7 bezeichnet. Diese tragen die oberen Bewehrungsgitter 2 beim Verlegen.

In der neutralen Zone befinden sich Heizungsrohre 3, die auf Aufzugsträgerelementen 4 befestigt sind. Die Aufzugsträgerelemente 4 sind mit Hilfe von Aufzugshaltern 6 an dem oberen Bewehrungsgitter befestigt.

Die Aufzugshalter 6 sind so gestaltet, wie es am besten der Fig. 3 zu entnehmen sind. Sie sind L-förmig. Der in Gebrauchslage senkrecht stehende Steg ist mit 6a und der in Gebrauchslage waagerecht liegende Steg ist mit 6b bezeichnet. Ein Haken 6c dient dem Einhängen in das obere Bewehrungsgitter 2. Der waagerechte Steg 6b ist schraubenförmig ausgebildet oder gewickelt, so daß er einen Gitterstab des Aufzugsträgerelementes 3 zwischen sich aufnehmen kann.

In Fig. 2 ist ein gitterförmiges Aufzugsträgerelement 4 dargestellt. Dieses besteht aus senkrecht zueinander verlaufenden Gitterstäben 4a und 4b. Verformungen 8 in den Gitterstäben 4b dienen dem Befestigen der Heizungsrohre 3.

Beim Betrachten der Fig. 2 wird deutlich, daß die waagerecht verlaufenden Stege 6b einmal mit den in einer Richtung verlaufenden Gitterdrähten 4a und zum anderen mit den senkrecht hierzu verlaufenden Gitterdrähten 4b verbunden sind. Da eine Bewegung des Aufzugsträgerelementes senkrecht zu dem Verlauf des waagerechtes Steges 6b nicht möglich ist und die waagerechten Stege 6b der verschiedenen Aufzugshalter 6 senkrecht zueinander verlaufen, erfolgt eine Sicherung der gesamten Ebene des Aufzugsträgerelementes 4. Das Aufzugsträgerelement 4 kann sich nicht nach oben bewegen. Die Haken 6c werden nach dem Einhängen so verformt, daß hier ebenfalls eine Bewegung nach oben verhindert wird. Es ist einzusehen, daß besondere Elemente, die das Aufzugsträgerelement 4 mit dem unteren Bewehrungsgitter verbinden, um ein Aufschwemmen zu verhindern, nicht erforderlich sind.

Um das Aufzugsträgerelement mit den Heizungsrohren an seinem Platz zu befestigen, werden die Aufzugshalter auf die Gitterdrähte 4a und 4b des Aufzugsträgerelementes aufgesetzt. Das gesamte Aufzugsträgerelement mit den Aufzugshaltern wird dann angehoben und in die oberere Bewehrung eingehängt. Die Aufzugshalter werden dann an den Haken 6c verformt, um für eine Fixierung zu sorgen.

## Patentansprüche

1. Aufzugshalter zum Aufhängen von Heizungsrohre (3) tragenden gitterförmigen Aufzugsträgerelementen (4) in Betondecken und Betonfußböden (1) mit Bewehrungsgitter (2), gekennzeichnet durch die L-förmige Ausbildung, wobei der in Gebrauchslage senkrechte Steg (6a) an dem Bewehrungsgitter (4) befestigbar und der waagerechte Steg (6b) formschlüssig mit einem Gitterdraht (4a oder 4b) des Aufzugsträgerelementes (4) verbindbar ist.

2. Aufzugshalter nach Anspruch 1, dadurch gekennzeichnet, daß der waagerechte Steg (6b) schraubenförmig zur Aufnahme des ausgewählten Gitterdrahtes (4a oder 4b) ausgebildet ist.

3. Aufzugshalter nach Anspruch 1 oder 2, dadurch gekennzeichnet, daß an dem freien Ende des senkrechten Steges (6a) ein verformibarer Haken (6c) vorgesehen ist.
